# EUROPÄISCHE PATENTANMELDUNG

(11) **EP 1 746 241 A2**
(43) Veröffentlichungstag der Anmeldung: **24.01.2007**
(21) Anmeldenummer: 06117594.9
(22) Anmeldetag: 20.07.2006
(51) Int. Cl.: E06B 3/54, F16B 5/00

(54) **Plattenverbinder**

(30) Priorität: 20.07.2005 DE 202005011425 U
(71) Anmelder: CASMA S.p.A., 20154 Milano (IT)
(72) Erfinder: Marinoni, Mirko, 20013, Magenta (IT)
(74) Vertreter: Viering, Jentschura & Partner

(57) **Zusammenfassung**

Die Erfindung betrifft einen Plattenverbinder zum Verbinden von stumpf aneinandergrenzender Platten (100, 200), insbesondere von Glasplatten, zwischen denen ein Spalt (500) vorhanden ist, mit wenigstens einem Schraubelement (10) zum Hindurchstecken durch den Spalt (500), das mit einem Schraubgewinde versehen ist, wobei das Schraubelement (10) von einem Flachstab (1) gebildet wird und das Schraubgewinde von zwei entsprechend der Gewindesteigung gegeneinander versetzten Zahnungen (11, 12) an den Schmalseiten des Flachstabes (1) gebildet wird.

## Beschreibung

Die Erfindung betrifft einen Plattenverbinder zum Verbinden stumpf aneinandergrenzender Platten, insbesondere Glasplatten.

Plattenverbinder zum Verbinden stumpf aneinandergrenzender Platten werden insbesondere für Konstruktionen wie z.B. Vitrinen, Zwischenwände oder Gebäudefassaden, die beispielsweise aus Glasplatten zusammensetzt sind, verwendet, bei denen zumindest einige der Plattenverbinder an einer Tragkonstruktion im Inneren eines Gebäudes abgestützt sind. Bekannte Plattenverbinder weisen beispielsweise eine Rahmenkonstruktion mit im Querschnitt U-förmigen Schienen auf, bei denen stumpf aneinandergrenzende Platten mit ihren freien Rändern zwischen den freien Schenkeln der U-Schiene aufgenommen und in diesen befestigt werden können, wobei an zumindest zwei Rändern einer Platte eine solche U-Schiene angeordnet ist. Jedoch ist eine derartige Konstruktion dann nicht geeignet, wenn eine aus Glasplatten zusammengesetzte Fassade den optischen Eindruck erwecken soll, dass die Fassade im Wesentlichen nur aus Glasplatten besteht und die Glasplatten keine deren Ränder umgreifende undurchsichtige Rahmenteile aufweisen soll.

Ferner sind Plattenverbinder bekannt, mittels denen stumpf aneinandergrenzende Platten punktuell verbunden sind. Insbesondere aus dem Dokument DE 299 19 333 U1 ist ein Plattenverbinder bekannt, der zum Verbinden von beispielsweise vier in einer Ebene stumpf aneinandergrenzender Platten einen gleichschenkligen kreuzförmigen Stützträger aufweist, an dessen vier Enden jeweils ein Mutternkörper ausgebildet ist, welche jeweils mit ihrer Schraubachse senkrecht zu den Platten ausgerichtet sind. In dem Bereich, in dem sich die Schenkel des Stützträgers kreuzen, sind Mittel zum Verbinden bzw. Abstützen an einem an sich bekannten Traggerüst vorgesehen. Der Stützkörper wird so an die vier miteinander zu verbindenden Platten angesetzt, dass jeweils einer der Mutternkörper mit seiner Gewindeöffnung im Bereich eines Durchgangslochs an den Platten anliegt, die jeweils vorzugsweise im Bereich deren einander zugewandter Ecken ausgebildet sind. Von der anderen, vorzugsweise von der nach außen gerichteten Plattenseite her, sind Gewindebolzen durch die Durchgangslöcher in den Platten hindurch eingesteckt und mittels Kontermuttern in den Durchgangslöchern bzw. an den jeweiligen Platten festgelegt, wobei die freien Enden der Gewindebolzen in die vier zugeordneten Mutternkörper eingeschraubt werden, so dass die vier Platten mittels des Plattenverbinders miteinander verbunden werden. Die Durchgangslöcher in den Platten weisen hierbei einen konischen Senkabschnitt auf, so dass unter Zwischenlegen einer konischen Schicht ein konischer Klemmring eingesetzt werden kann, in dem wiederum der Kopf des Gewindebolzens versenkt aufgenommen werden kann. Das Herstellen von solchen Durchgangslöchern, insbesondere in Glasplatten, birgt jedoch das Risiko, dass die Platten beim Bohren aufgrund ihrer Materialspannung reißen oder gar brechen können. Insbesondere dann, wenn die Durchgangslöcher im Bereich der Plattenecken ausgebildet sind, besteht auch noch beim Montieren, dass heißt beim Verbinden der Platten mittels des Plattenverbinders, die Gefahr, dass die Ecken der zu verbindenden Platten ausbrechen können. Außerdem ist es notwendig, dass die Durchgangslöcher genau positioniert sind, da sich ansonsten die Mutternkörper nur schwerlich auf die in den Durchgangslöchern festgelegten Gewindebolzen aufschrauben lassen.

Es ist daher eine Aufgabe der Erfindung einen Plattenverbinder zum Verbinden stumpf aneinandergrenzender Platten zu schaffen, bei dem das Vorsehen von Durchgangslöchern in den Platten nicht notwendig ist.

Gemäß der Erfindung wird dies mit einem Plattenverbinder zum Verbinden von stumpf aneinandergrenzender Platten, insbesondere von Glasplatten, zwischen denen ein Spalt vorhanden ist, erreicht, mit wenigstens einem Schraubelement zum Hindurchstecken durch den Spalt, das mit einem Schraubgewinde versehen ist, wobei das Schraubelement von einem Flachstab gebildet wird und das Schraubgewinde von zwei entsprechend der Gewindesteigung gegeneinander versetzten Zahnungen an den Schmalseiten des Flachstabes gebildet wird.

Die Vorteile des erfindungsgemäßen Plattenverbinders bestehen insbesondere darin, dass dessen Schraubelement als Flachstab ausgebildet ist, der durch den Spalt von zwei stumpf aneinandergrenzenden Platten hindurchgesteckt werden kann. Das vorherige Ausbilden von Durchgangslöchern in den Platten kann somit entfallen. Da der Flachstab durch den Spalt zwischen zwei Platten hindurch eingesteckt wird, ist dieser Flachstab dadurch ohne weitere Unterstützungselemente in seiner Einstecklage verdrehsicher gehalten. Ferner kann das Schraubelement frei wählbar im gesamten Stoßbereich zwischen zwei Platten angeordnet werden, es muss nicht an einer z.B. von Durchgangslöchern vorbestimmten Position angeordnet werden. Darüber hinaus stellt auch das Herstellen des Schraubelements eine einfache Maßnahme dar, da ein an sich übliches Flachprofil lediglich an seinen Schmalseiten mit Schraubgewinde versehen werden muss, das von zwei entsprechend der Gewindesteigung gegeneinander versetzten Zahnungen an den Schmalseiten des Flachstabes gebildet wird. Die gegeneinander versetzte Verzahnung an den Schmalseiten ist dabei so gewählt, dass auf das Schraubelement vorzugsweise ein Mutternkörper mit metrischem Gewinde aufschraubbar ist, wobei die Verzahnung ferner zum Aufschrauben eines Mutternkörper mit wahlweise ein- oder mehrgängigem Gewinde ausgeführt sein kann. Dabei versteht sich, dass die Flachstäbe aus entsprechend festem, beständigem Material hergestellt sind. So kann der Flachstab aus einem Metall oder einem hochfestem Kunststoff sein, und durch Ausstanzen oder beispielsweise Spritzgießen gefertigt werden.

Gemäß einer Ausgestaltung des erfindungsgemäßen Plattenverbinders wird das Schraubeelement zum Hindurchstecken durch einen kreuzförmigen Spalt von zwei zusammengefügten Flachstäben gebildet, die im Querschnitt ein gleichschenkliges Kreuz formen und bei denen die Zahnungen an der Schmalseite des einen Flachstabes zu den Zahnungen der Schmalseite des benachbarten anderen Flachstabes entsprechend der Gewindesteigung versetzt sind.

Diese Ausführungsform kann zum Verbinden von vier, einen kreuzförmigen Spalt zwischen sich ausbildenden stumpf aneinandergrenzenden Platten verwendet werden, wobei in jeweils einen Schlitz zwischen zwei der Platten einer der kreuzbildenden Schenkel eingreift. Die zwei vorzugsweise identischen Flachstäbe können hierzu jeweils einen sich entlang ihrer Schraubachse verlaufenden Schlitz aufweisen, der sich etwa bis zur deren Längsmitte erstreckt. Durch Zusammenstecken der beiden Flachstäbe mit ihren Schlitzen, indem der Schlitz des einen Flachstabs den nicht geschlitzten Abschnitt des anderen Flachstabs zwischen sich aufnimmt, kann das im Querschnitt kreuzförmige gleichschenklige Schraubelement einfach hergestellt werden. Beim Ausbilden der Zusammenstecktiefe der Flachstäbe muss dann nur darauf geachtet werden, dass die Zahnungen an der Schmalseite des einen Flachstabes zu den Zahnungen der Schmalseite des benachbarten anderen Flachstabes entsprechend der Gewindesteigung versetzt angeordnet sind. Es ist aber auch möglich, dass zunächst zwei Flachstäbe zusammengefügt werden oder ein Kreuzprofilstab an sich verwendet wird, auf deren Schmalseiten erst nachträglich die entsprechenden Zahnungen angeformt werden, was beispielsweise mittels eines entsprechenden Gewindeschneidwerkzeugs erfolgen kann.

Gemäß einer anderen Ausführungsform der Erfindung weist der Plattenverbinder zwei Flachstäbe auf, die in einer Ebene nebeneinander und im Abstand voneinander angeordnet sind. Insbesondere dann, wenn die Platten eine bestimmte Größe überschreiten, kann es von Vorteil sein, einen mit zwei solcherart ausgebildeten Schraubelementen aufweisenden Plattenverbinder zu verwenden, bei dem die zwei nebeneinander angeordneten Flachstäbe durch den gleichen Plattenspalt hindurch gesteckt werden.

Gemäß einer anderen Ausgestaltung hat der Plattenverbinder vier Flachstäbe, die paarweise in einer Ebene nebeneinander und im Abstand voneinander angeordnet sind, wobei sich die zwei Ebenen jeweils zwischen den Flachstäben eines Paares kreuzen. Der Plattenverbinder gemäß dieser Ausführungsform kann für vier in der gleichen Ebene angeordnete Platten verwendet werden, die zwischen sich einen Kreuzspalt ausbilden, wobei jeweils ein ein Schraubelement ausbildender Flachstab durch einen der vier Spalte hindurchgesteckt wird und auf jeden der Flachstäbe beispielsweise ein Mutternkörper von jedem seiner freien Enden her aufschraubbar ist. Dieser Plattenverbinder kann auch dann verwendet werden, wenn die jeweils einander gegenüberliegenden Spalte zwischen zwei Platten ungenau aufeinander ausgerichtet sind.

Ferner wird gemäß der Erfindung ein Plattenverbinder geschaffen zum Verbinden von stumpf aneinandergrenzender Platten, insbesondere von Glasplatten, zwischen denen ein Spalt vorhanden ist, mit wenigstens einem Schraubelement zum Hindurchstecken durch den Spalt, das mit einem Schraubgewinde versehen ist, wobei das Schraubelement von wenigstens zwei Flachstäben gebildet wird, die mit ihren Schmalseiten diametral zur Schraubachse ausgerichtet im Abstand voneinander angeordnet sind, wobei das Schraubgewinde von zwei entsprechend der Gewindesteigung gegeneinander versetzten Zahnungen an den einander zugewandten Schmalseiten der Flachstäbe oder an den einander abgewandten Schmalseiten der Flachstäbe gebildet wird.

Im Unterschied zu den vorgenannten Ausführungsformen weisen die wenigstens zwei Flachstäbe nicht jeweils an ihren beiden Schmalseiten die vorbestimmte Zahnung auf, sondern diese sind entweder an den einander zugewandten Schmalseiten der Flachstäbe oder an den einander abgewandten Schmalseiten der Flachstäbe ausgebildet. Jedoch ist als Sonderform auch möglich, dass die zwei solcherart angeordneten Flachstäbe entsprechende Zahnungen sowohl an den einander zugewandten Schmalseiten als auch an den einander abgewandten Schmalseiten aufweisen. Bei dieser Ausführungsform sind die Flachstäbe radial zur Schraubachse und vorzugsweise einander gegenüberliegend angeordnet, wobei das Schraubelement mit beiden Flachstäben denselben Spalt zwischen zwei Platten durchdringen kann oder der eine Flachstab des Schraubelements durch den Spalt zwischen einem ersten Paar Platten und der andere Flachstab desselben Schraubelements durch den gegenüberliegenden Spalt eines zweiten Paares Platten hindurchgesteckt werden kann, das angrenzend an das erste Paar Platten angeordnet ist.

Gemäß einer Weiterbildung der vorgenannten Ausführungsform wird das Schraubelement von vier Flachstäben gebildet, die paarweise einander diametral zur Schraubachse gegenüberliegen, und das Schraubgewinde von vier entsprechend der Gewindesteigung gegeneinander versetzten Zahnungen an den entsprechenden Schmalseiten der Flachstäbe gebildet wird. Die Vorteile dieser Ausführungsform sind wiederum darin zu sehen, dass der Plattenverbinder geeignet ist, vier in einer Flächenebene angeordnete Platten miteinander zu verbinden, wobei jeder der Flachstäbe durch einen anderen Spalt zwischen zwei Platten hindurchgesteckt wird.

Gemäß einer bevorzugten Ausgestaltung kreuzen sich die Ebenen der einander paarweise gegenüberliegenden vier Flachstäbe in der Schraubachse im rechten Winkel. Dieser Plattenverbinder ist geeignet, vier stumpf aneinandergrenzende quadratische oder rechteckige Platten miteinander zu verbinden.

Als eine Alternative zu dieser Ausführungsform kann ein Plattenverbinder in Anpassung an besondere Plattenformen jedoch auch vier oder mehr als vier radial zur Schraubachse ausgerichtete Flachstäbe aufweisen, bei denen jeweils zwei in Schraubrichtung einander benachbarte Flachstäbe einen Winkel von mehr oder weniger als 90° einschließen können.

Gemäß einer bevorzugten Ausgestaltung eines erfindungsgemäßen Plattenverbinders ist ein Stützkörper mit einer Stützfläche zur Abstützung an den Platten vorgesehen, wobei jeder Flachstab von dem Stützkörper senkrecht zu der Stützfläche absteht. Das Stützelement, von dem jeder Flachstab absteht, kann als ebener polygonaler, ovaler, kreisrunder oder kreuzförmiger Plattenkörper ausgebildet sein, der beispielsweise mit seiner gesamten, den Platten zugewandter Stützfläche, an diesen anliegen kann. Der Stützkörper kann aber auch ein mehr-, vorzugsweise vierarmiger (kreuzförmiger) nach innen gewölbter Träger sein, der so geformt ist, dass der Träger jeweils nur im Bereich seiner vorzugsweise vier freien Armenden die Stützfläche aufweist, wobei von diesen Armenden jeweils ein Flachstab senkrecht absteht. Der Stützkörper kann an seiner der Stützfläche abgewandten Seite ferner Befestigungsmittel aufweisen, mittels denen der erfindungsgemäße Plattenverbinder mit einem die z.B. Glasfassade abstützenden Traggerüst verbunden werden kann.

Gemäß einer weiteren Ausgestaltung ist der Stützkörper als Stützscheibe ausgebildet, wobei jeder Flachstab durch einen Steckschlitz hindurchragt, der in der Stützscheibe ausgebildet ist. Steckschlitze sind in der Stützscheibe gemäß der Anzahl und Anordnung bzw. Ausrichtung der Flachstäbe ausgebildet, so dass die vorgenannten Ausführungsformen des Plattenverbinders gebildet werden können.

Gemäß einer Weiterbildung der Erfindung sind zwei Stützkörper vorgesehen, deren Stützflächen einander zugewandt sind. Gegenständlich bedeutet das, dass zwei Stützkörper jeweils mit ihrer Stützfläche einander zugewandt sind, zwischen denen die zu verbindenden Platten angeordnet werden können. Jedem Flachstab können jeweils zwei Steckschlitze zugeordnet sein, von denen jeweils einer in jedem der zwei Stützkörper ausgebildet ist. Durch die miteinander fluchtenden Steckschlitze und den gleichzeitig mit den Steckschlitzen fluchtenden Spalt zwischen den Platten hindurch kann ein Flachstab so eingesetzt sein, dass dieser aus jedem der Stützkörper mit seinem entsprechenden freien Ende herausragt. Die Stützkörper erfüllen damit einerseits die Funktion, den Flachstab abzustützen und dessen Position festzulegen und andererseits die Funktion, eine an den Platten anliegende Klemmfläche auszubilden.

Gemäß einer besonderen Ausgestaltung sind die beiden Stützkörper als Muttern ausgebildet, die von beiden Enden her auf das Schraubelement aufschraubbar sind.

Gemäß einer anderen Ausgestaltung ist jeder Flachstab an dem Stützkörper verankert. Das heißt, jeder Flachstab kann an dem einen Stützkörper z.B. durch Anschweißen fest an dem Stützkörper festgelegt sein. Diese Ausführungsform eignet sich zum einen dazu, dass auf das andere Ende des Schaubelements ein Gegenschraubelement aufschraubbar ist oder das von diesem anderen Ende her ein weiterer Stützkörper mit seinem Steckschlitz auf das Schraubelement aufgeschoben werden kann.

Gemäß einer Ausgestaltung der einen Ausführungsform ist an dem Plattenverbinder zusätzlich eine Mutter vorgesehen, die auf die Zahnungen der einander zugewandten Flachstäbe aufschraubbar ist. Eine solche Mutter, die auch als äußerlich besonders gestalteter Mutternkörper ausgeführt sein kann, kann einerseits auf ein Schraubelement, das einen Flachstab mit Zahnungen an seinen beiden Schmalseiten aufweist, und andererseits auf ein Schraubelement, das zwei oder mehrere Flachstäbe aufweist und bei dem die Verzahnungen an den einander abgewandten, das heißt äußeren Schmalseiten der Flachstäbe gebildet ist, aufgeschraubt werden. Bei letzterer Ausgestaltung umgreift die Mutter die mehreren Flachstäbe gemeinsam. Eine solche Mutter kann unabhängig davon, ob kein, ein oder zwei Stützkörper angeordnet sind, vorgesehen sein oder auch selbst den Stützkörper ausbilden.

Gemäß einer Ausgestaltung der anderen Ausführungsform ist an dem Plattenverbinder zusätzlich eine Schraube vorgesehen, die zwischen die Zahnungen der einander zugewandten Schmalseiten der Flachstäbe einschraubbar ist. Eine solche Schraube kann in ein Schraubelement mit zwei oder mehreren Flachstäben eingeschraubt werden, bei dem die entsprechend der Gewindesteigung gegeneinander versetzten Zahnungen an den einander zugewandten bzw. an den der Schraubachse zugewandten Schmalseiten der Flachstäbe ausgebildet sind.

Gemäß einer besonderen Ausgestaltung ist es jedoch auch möglich, dass einerseits zwischen die mehreren Flachstäbe die Schraube eingeschraubt wird und andererseits um diese Flachstäbe herum zusätzlich eine vorgenannte Mutter aufgeschraubt wird, vorausgesetzt die Flachstäbe weisen an ihren beiden Schmalseiten jeweils entsprechende Verzahnungen auf.

Ferner wird gemäß der Erfindung eine Anordnung eines Plattenverbinders zum Verbinden stumpf aneinandergrenzender Platten, zwischen denen ein Spalt vorhanden ist, geschaffen, wobei die Flachstäbe beidseitig des Spaltes aus diesem herausragen.

Anhand der beigefügten Zeichnung werden zumindest schematisch dargestellte Ausführungsformen des erfindungsgemäßen Plattenverbinders näher beschrieben. Die Zeichnung zeigt in:
Fig. 1A eine erste Ausführungsform eines Plattenverbinders bei dem das Schraubelement durch einen Spalt zwischen Platten hindurch gesteckt ist;
Fig. 1B ein von einem Flachstab gebildetes Schraubelement gemäß einer ersten Ausführungsform;
Fig. 2A eine schematische Darstellung des Schraubelements gemäß einer ersten Ausführungsform mit einem Stützkörper;
Fig. 2B eine schematische Darstellung einer Anordnung mit zwei Schraubelementen gemäß einer ersten Ausführungsform mit einem Stützkörper;
Fig. 3A eine schematische Darstellung des Schraubelements gemäß einer zweiten Ausführungsform mit einem Stützkörper;
Fig. 3B eine schematische Darstellung des Schraubelements gemäß einer dritten Ausführungsform mit einem Stützkörper;
Fig. 3C eine weitere Anordnung des Schraubelements gemäß einer zweiten Ausführungsform mit einem Stützkörper;
Fig. 3D eine weitere Anordnung des Schraubelements gemäß einer dritten Ausführungsform mit einem Stützkörper;
Fig. 4 eine schematische Darstellung des Schraubelements gemäß einer vierten Ausführungsform mit einem Stützkörper;
Fig. 5A eine Ausführungsform eines Stützkörpers mit Steckschlitzen;
Fig. 5B eine andere Ausführungsform eines Stützkörpers mit Steckschlitzen;
Fig. 5C eine weitere Ausführungsform eines Stützkörpers mit Steckschlitzen.

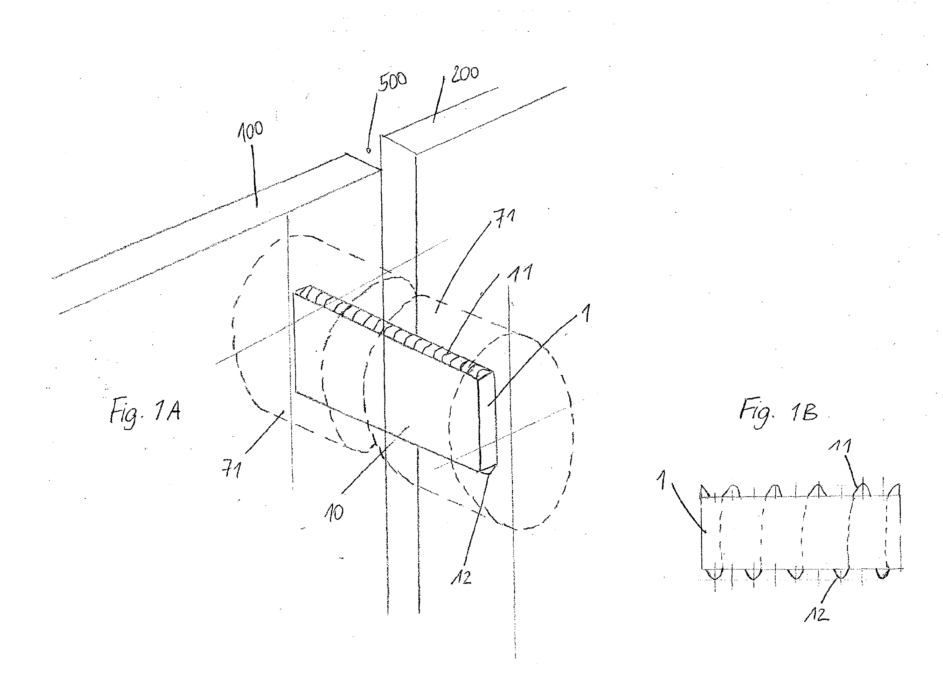

Wie aus Figur 1A ersichtlich ist, weist der erfindungsgemäße Plattenverbinder ein von einem Flachstab 1 ausgebildetes Schraubelement 10 auf, das zum Verbinden von zwei stumpf aneinandergrenzende Platten 100, 200 durch den zwischen den beiden Platten 100, 200 vorhandenen Spalt 500 hindurchgesteckt ist. Die beiden Platten 100, 200 können Bestandteile einer Ganzglasfassade, eine Glaszwischenwand, einer Glasvitrine oder dergleichen sein. Wie insbesondere aus Figur 1B zu erkennen ist, weist der Flachstab 1 an seinen beiden Schmalseiten jeweils Zahnungen 11, 12 auf, die entsprechend der Gewindesteigung gegeneinander versetzt sind. Mit den in Figur 1B gestrichelten Linien wird angezeigt, wie der imaginäre Gewindegang zwischen der in der Darstellung oberen Zahnung 11 und der unteren Zahnung 12 verlaufen würde, wenn es sich bei dem Schraubelement 10 um ein übliches Schraubengewinde handeln würde. Mit dieser gestrichelten Linie soll lediglich aufgezeigt werden, wie die obere Zahnung 11 relativ zu der unteren Zahnung 12 versetzt ist. Der Flachstab 1 mit seinen Zahnungen 11, 12 kann beispielsweise durch Ausstanzen aus einer Metallplatte, durch Spritzgießen, falls es sich um eine Flachstab 1 aus Kunststoff handelt, durch Aufschneiden eines Gewindes auf ein ebenes Flachprofil oder durch jedes andere geeignete Fertigungsverfahren einfach hergestellt werden. Gemäß der in der Figur 1A aufgezeigten Ausführungsform ragen jeweils die freien Enden des Flachstabs 1 zu beiden Seiten des Spaltes 500 aus den Spalt 500 heraus. Auf diese freien Enden kann zum Verklemmen der beiden Platten 100, 200 mittels des erfindungsgemäßen Plattenverbinders jeweils ein Mutternkörper 71 aufgeschraubt werden, so dass die Platten 100, 200 zwischen den beiden Mutternkörpern 71 miteinander verklemmt werden können. Auf diese Weise können stumpf aneinandergrenzende Platten 100, 200 miteinander verbunden werden, ohne dass die Platten mit Durchgangslöchern zum Hindurchstecken eines Verbindungselements ausgeführt werden müssen. In der Figur 1A ist ein solches Schraubelement 10 dargestellt, es könne jedoch je nach Erfordernis, beispielsweise in Abhängigkeit der Größe der Platten 100, 200, auch zwei oder mehrere solcher Plattenverbinder nebeneinander, den gleichen Spalt durchdringend, angeordnet werden.

Zwischen den Platten 100, 200 und der den Platten 100, 200 zugewandten Stirnseite der Mutternkörper 71 kann vorzugsweise jeweils eine Klemm- oder Dichtscheibe (nicht gezeigt) angeordnet sein, so dass eine gute Klemmwirkung erzielt werden kann. Die Mutternkörper 71 weisen ein an die Zahnungen 11, 12 des Flachstabs 1 angepasstes an sich übliches Innengewinde (nicht dargestellt) mit entsprechender Gewindesteigung auf. Die äußere Form des Mutternkörpers 71 ist gemäß der Figur 1A zylindrisch, jedoch kann die äußere Form des Mutternkörpers 71 je nach ästhetischem Wunsch frei gestaltet werden. Ebenso kann das Mutterngewinde auch durchgängig sein.

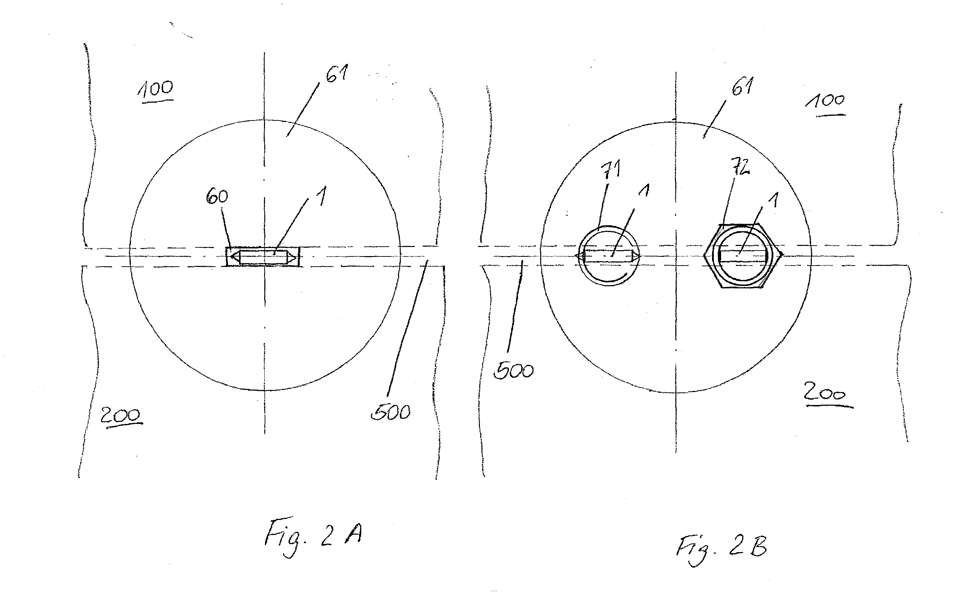

In den Figuren 2A und 2B sind weitere Verwendungsformen des Plattenverbinders gemäß der ersten Ausführungsform dargestellt. In der Figur 1A ist ein Schraubelement 10 durch den Spalt 500 zwischen den zwei Platten 100 und 200 hindurchgesteckt. Der Plattenverbinder weist bei dieser Ausgestaltung einen kreisrunden plattenförmigen Stützkörper 61 auf, dessen Stützfläche den Platten 100, 200 zugewandt ist und in dem ein Steckschlitz 60 ausgebildet ist, durch den der Flachstab 1 hindurchragt. Vorzugsweise ist auch an der anderen Seite der Platten 100, 200 ein solcher Stützkörper 61 mit einem Steckschlitz 60 angeordnet, so dass der Flachstab mit seinen beiden Längsenden durch den Steckschlitz 60 jeweils eines Stützkörpers 61 hindurchragt. Auf die freien Endes des Flachstabs können an sich üblich Muttern (nicht gezeigt) oder ein Mutternkörper 71, wie in Figur 1A dargestellt aufgeschraubt werden.

In der Figur 2B ist ein Plattenverbinder mit zwei solchen Schraubelementen 10 in Draufsicht dargestellt, wobei die beiden Flachstäbe 1 mit ihrem in der Darstellung hinterem Ende an dem Stützkörper 60 verankert, also beispielsweise durch Anschweißen an diesem befestigt sind und senkrecht vom Stützkörper 61 abstehen. Die beiden an dem Stützkörper 61 verankerten senkrecht abstehenden Flachstäbe 1 sind in dieser Darstellung von der Hinterseite der Platten 100, 200 her durch deren Spalt 500 hindurchgesteckt und ragen mit ihren freien Enden nach vorn aus dem Spalt 500 heraus. Auf diese freien Enden kann, wie auf der linken Seite gezeigt, entweder ein Mutternkörper 71, der hier nur angedeutet ist, oder wie auf der rechten Seite dargestellt, eine an sich übliche Mutter 72 aufgeschraubt werden. Ferner kann auf der vorderen Seite zwischen den Muttern 71, 72 und den Platten 100, 200 eine weiterer, jedoch Steckschlitze aufweisender Stützkörper angeordnet sein, der den hinteren Stützkörper 61 in Draufsicht überlagert.

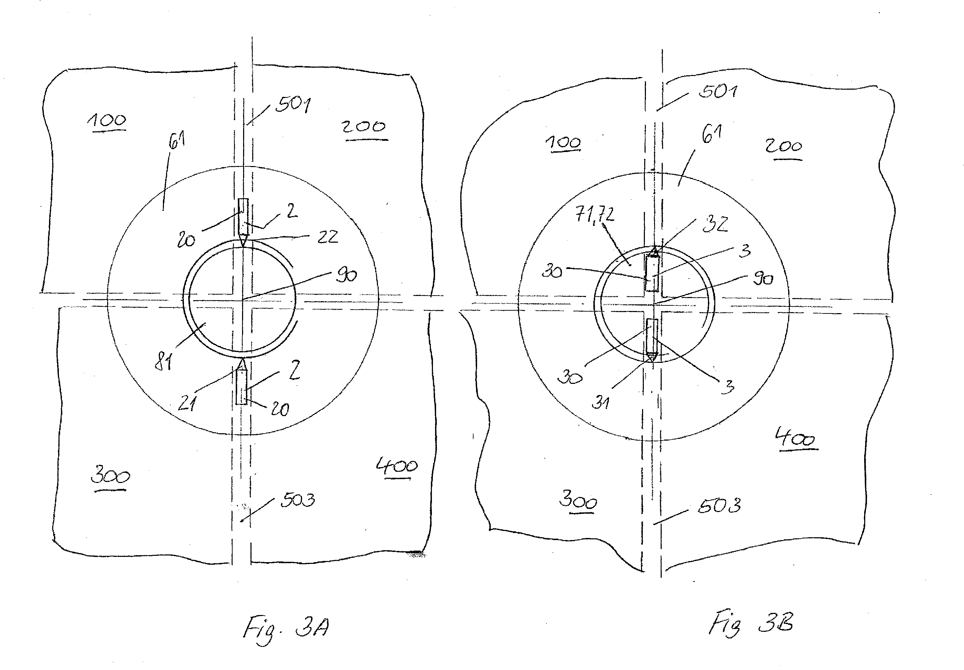

In den Figuren 3A bis 3D sind eine zweite und eine dritte Ausführungsform des erfindungsgemäßen Plattenverbinders dargestellt. Die Plattenverbinder gemäß der Figuren 3A und 3B sind jeweils zum Verbinden von zwei Platten 100/300, 200/400 oder von vier Platten 100, 200, 300, 400 geeignet.

Der Plattenverbinder gemäß der Figur 3A bzw. der Figur 3B weist ein Schraubelement 20 bzw. 30 zum Hindurchstecken durch den Spalt 501 und 503 auf, das von den zwei Flachstäben 2 bzw. 3 gebildet wird. Die Flachstäbe 2 bzw. 3 sind jeweils mit ihren Schmalseiten diametral zur Schraubachse 90 ausgerichtet und weisen jeweils einen Abstand zwischen sich auf.

Gemäß der Ausführungsform in der Figur 3A wird das Schraubgewinde des Schraubelements 20 von zwei entsprechend der Gewindesteigung gegeneinander versetzte Zahnungen 21, 22 gebildet, die an den einander zugewandten Schmalseiten der Flachstäbe 2 ausgeformt sind, so dass diese beiden Flachstäbe 2 mit ihren Zahnungen 21, 22 beidseits der Platten jeweils ein Innengewinde bilden. In diese Innengwinde zu beiden Seiten der Platten 100/300 und 200/400, das heißt zwischen die beiden Flachstäbe 2, kann jeweils ein Schraubenkörper 81 mit entsprechender Gewindesteigung, der hier nur schematisch dargestellt ist, so eingeschraubt werden, dass diese mit ihren freien abgeflachten Ende gegen die Platten 100/300 und 200/400, den Spalt 501/503 überbrückend, fest angezogen bzw. angedrückt wird.

Gemäß der Ausführungsform in der Figur 3B wird das Schraubgewinde des Schraubelements 30 von zwei entsprechend der Gewindesteigung gegeneinander versetzte Zahnungen 31, 32 gebildet, die an den einander abgewandten Schmalseiten der Flachstäbe 3 ausgeformt sind, so dass diese beiden Flachstäbe 3 mit ihren Zahnungen 31, 32 einen Bestandteil eines Außengewindes bilden. Auf die beiden Flachstäbe 3, die gemeinsam das Schraubelement 30 ausbilden, können beidseits der Platten 100/300 und 200/400 jeweils ein Mutternkörper 71 oder ein übliche Mutter 72 mit entsprechender Gewindesteigung aufgeschraubt werden.

Sowohl bei der Ausführungsform gemäß Figur 3A als auch bei der Ausführungsform gemäß Figur 3B ist jeweils zumindest ein Stützkörper 61 vorgesehen, von dem sich die Flachstäbe 2 bzw. 3 senkrecht erstrecken. So können die Flachstäbe 2 bzw. 3 an ihrem entsprechenden Stützkörper 61 fest verankert sein, so dass das Schraubelement 20 bzw. 30 nur auf einer Plattenseite mit einem Schraubgewindeabschnitt aus dem Plattenspalt herausragt. Oder jeder Flachstab 2 bzw. 3 kann durch jeweils einen entsprechenden Steckschlitz hindurchgesteckt in diesem abgestützt sein. Es kann ferner auch jeweils ein den ersten Stützkörper 61 überdeckender zweiter Stützkörper vorgesehen sein, der mit seiner Stützfläche den Platten 100/300 und 200, 400 zugewandt ist und der Steckschlitze aufweist, durch die hindurch die jeweiligen freien Endabschnitte der Flachstäbe 2 bzw. 3 hindurchragen, welche den effektiven Schraubabschnitt bilden. Die Ausführungsformen gemäß den Figuren 3A und 3B sind, wie ersichtlich ist, auch geeignet, vier Platten 100, 200, 300 und 400 miteinander zu verbinden, wobei die zwischen die Flachstäbe 2 einschraubbare Schraube 81 bzw, die auf die Flachstäbe 3 aufschraubbare Mutter 71, 72 jeweils im Bereich der vier einander zugewandten Ecken der Platten 100, 200, 300 und 400 klemmend an den Platten 100, 200, 300 und 400 angreifen. Wie bereits hinsichtlich der vorgenannten Ausführungsformen erwähnt, können zwischen den aufschraubbaren Muttern 71, 72 bzw. zwischen den einschraubbaren Schrauben 81 und den Platten 100, 200, 300 und 400 jeweils Dicht- oder Klemmkörper, vorzugsweise aus komprimierbarem Kunststoff angeordnet werden. Bei der Verwendung von Stützkörpern 61 können derartige, beispielsweise scheibenförmig ausgebildete Dicht- oder Klemmkörper auch zwischen den Platten und der den Platten zuwandten Stützfläche der Stützkörper angeordnet werden.

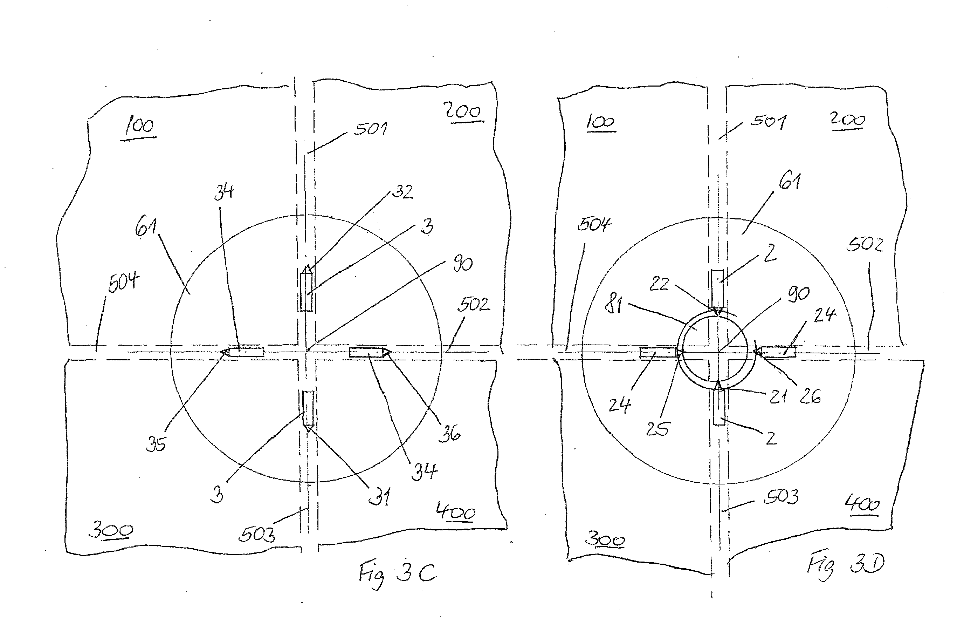

Eine jeweils andere Ausgestaltung der zweiten Ausführungsform bzw. der dritten Ausführungsform des Plattenverbinders zum Verbinden von vier rechteckigen oder quadratischen Platten 100, 200, 300 und 400 ist in den Figuren 3C bzw. 3D dargestellt. Bei diesen Ausgestaltungen weist das Schraubelement 20 bzw. 30, bei dem zwei Flachstäbe 2 bzw. 3 diametral zur Schraubachse 90 und im Abstand voneinander angeordnet sind, jeweils zwei zusätzliche Flachstäbe 24 bzw. 34 auf, wobei die Flachstäbe 2 und 24 sowie 3 und 34 jeweils paarweise einander gegenüberliegen. Das Schraubgewinde des Schraubelements in der Figur 3C wird von vier entsprechend der Gewindesteigung gegeneinander versetzten Zahnungen 31, 35, 32 und 36 an den nach außen gerichteten Schmalseiten der Flachstäbe 3 und 34 gebildet und das Schraubgewinde des Schraubelements in der Figur 3D wird von vier entsprechend der Gewindesteigung gegeneinander versetzten Zahnungen 21, 25, 22 und 26 an den nach innen gerichteten Schmalseiten der Flachstäbe 2 und 24 gebildet. Bei den Ausgestaltungen gemäß der Figur 3C und der Figur 3D kreuzen sich die Ebenen der einander paarweise gegenüberliegenden vier Flachstäbe 3 und 34 bzw. 2 und 24 in der Schraubachse 90 im rechten Winkel. Es ist aber auch möglich, dass die zwei zusätzlichen Flachstäbe 34 bzw. 24 zwar radial zur Schraubachse 90 ausgerichtet sind aber zwischen sich einen von 180° abweichenden Winkel einschließen, so dass für Platten, bei denen beispielsweise die Spalten 501 und 503 miteinander fluchten und der Winkel zwischen dem Spalt 501 und dem Spalt 502 bzw. der Winkel zwischen dem Spalt 501 und dem Spalt 504 beispielsweise jeweils 60° betragen, ein geeigneter Plattenverbinder bereitgestellt werden kann. Die Ausgestaltung des Pattenverbinders, das heißt die radiale Anordnung der jeweiligen Flachstäbe 2 und 24 bzw. 3 und 34 ist jeweils in Anpassung an die durch die Plattenform oder Fassadengestaltung vorgegebenen Bedingungen anpassbar. Auf die vier Flachstäbe 3 und 34 in der Figur 3C kann beidseits der Platten 100, 200, 300 und 400 eine entsprechende Mutter oder ein entsprechender Mutternkörper aufgeschraubt werden und zwischen die vier Flachstäbe 2 und 24 in der Figur 3D kann beidseits der Platten 100, 200, 300 und 400 jeweils eine entsprechende Schraube 81 eingeschraubt werden. Ferner können bei diesen beiden Ausgestaltungen, wie auch bei jenen gemäß den Figuren 3A und 3B, jeweils ein oder zwei Stützkörper 61 vorgesehen sein, wobei die Flachstäbe 3 und 34 bzw, 2 und 24 an einem der Stützkörper 61 verankert sein können, wobei dann selbstverständlich nur eine Mutter/ eine Schraube benötigt würde, oder beide der Stützkörper 61 weisen die entsprechenden Steckschlitze auf, durch die die Flachstäbe 3 und 34 bzw. 2 und 24 hindurchragen.

Als (nicht dargestellte) Alternative zu den Ausführungsformen gemäß den Figuren 3A bis 3D ist es auch möglich, beispielsweise die Flachstäbe 2 (Figur 3A) oder die Flachstäbe 2 und 24 (Figur 3D) mit Zahnungen jeweils an ihren beiden Schmalseiten auszubilden, so dass sowohl zwischen die Flachstäbe 2 oder 2 und 24 eine Schraube 81 einschraubbar ist als auch zusätzlich auf die Flachstäbe 2 oder 2 und 24 eine Mutter 71 aufschraubbar ist.

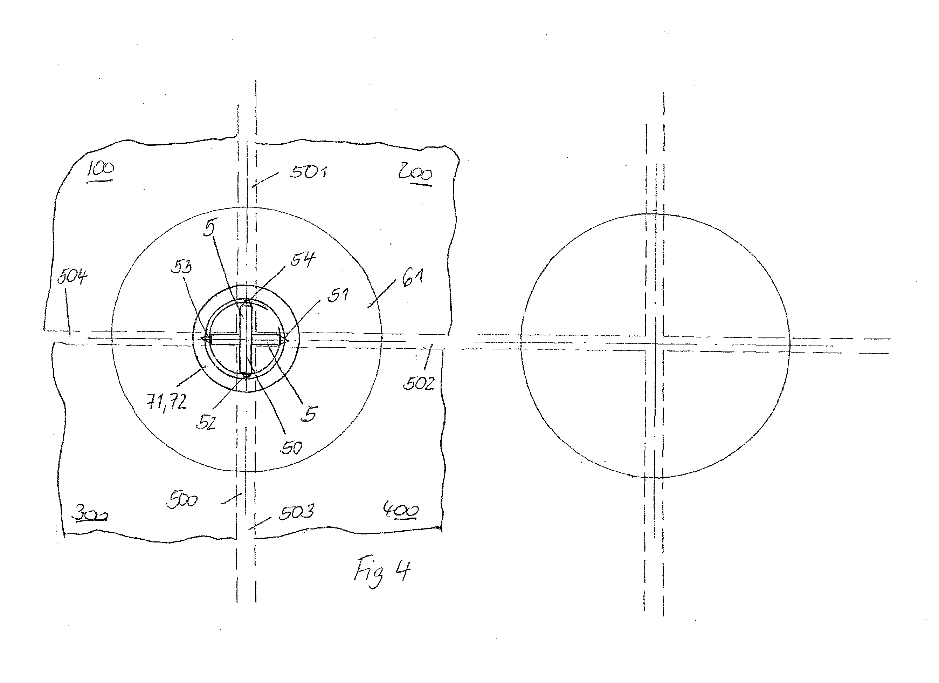

In der Figur 4 ist eine vierte Ausführungsform eines erfindungsgemäßen Plattenverbinders dargestellt. Bei dieser Ausführungsform ist das Schraubelement 50 zum Hindurchstecken durch einen kreuzförmigen Spalt 500 zwischen vier Platten 100, 200, 300 und 400 von zwei zusammengefügten Flachstäben 5 gebildet, die im Querschnitt ein gleichschenkliges Kreuz formen und bei denen die Zahnungen 51, 53 an der Schmalseite des einen Flachstabes 5 zu den Zahnungen 52, 54 des benachbarten anderen Flachstabs 5 entsprechend der Gewindesteigung versetzt sind und ein Schraubgewinde ausbilden, wobei in Schraubrichtung betrachtet, die Zahnung 51 bzw. 52 bzw. 53 bzw. 54 der einen Schmalseite zu der jeweils benachbarten Zahnung 52 bzw. 53 bzw. 54 bzw. 51 der nächsten Schmalseite jeweils um einen Betrag versetzt ist. Auf das Schraubelement 50 kann von seinen beiden freien Enden her jeweils eine Mutter 71 oder ein Mutternkörper 72 aufgeschraubt werden. Ferner können auch hier an einer oder an beiden Plattenseiten jeweils ein Stützkörper 61 vorgesehen sein, wobei der Stützschlitz in zumindest einem der beiden Stützkörper entsprechend dem Schraubelement 50 kreuzförmig ausgebildet ist. Das Schraubelement 50 ist vorzugsweise aus zwei gleichen Flachstäben gemäß der ersten Ausführungsform hergestellt. Eine Möglichkeit, die beiden Flachstäbe 5 zu dem Schraubelement 50 zusammen zu fügen besteht darin, beispielsweise jeden Flachstab mit einem Schlitz auszubilden, der sich in deren Längsrichtung bis beispielsweise zur Längsmitte erstreckt und in der Schraubachse verläuft, und die beiden Flachstäbe so zusammenzustecken, dass jeweils der Schlitz des einen Flachstabs den sich an den Schlitz anschließenden ungeschlitzten Bereich des anderen Flachstabs in sich aufnimmt, wobei lediglich darauf geachtet werden muss, dass die Zahnungen letztendlich gemäß der entsprechenden Gewindesteigung zueinander versetzt sind.

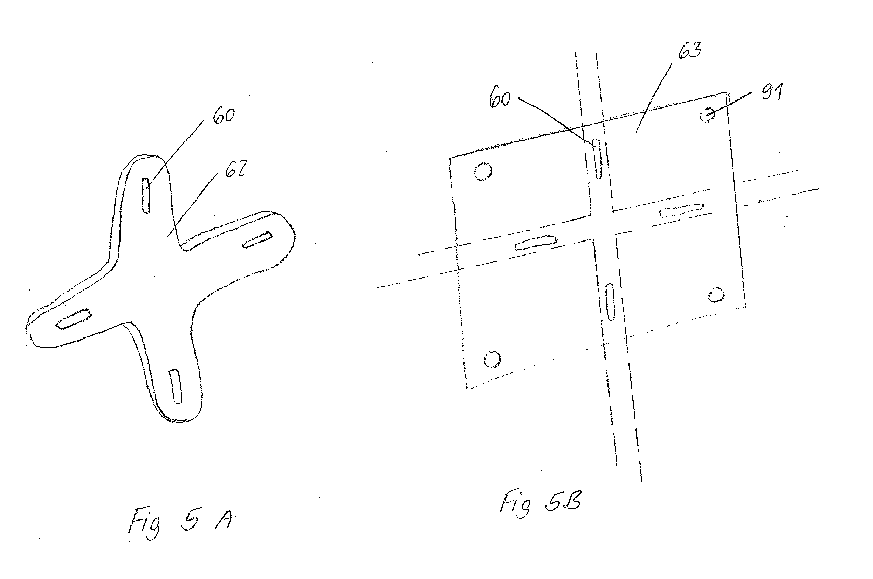

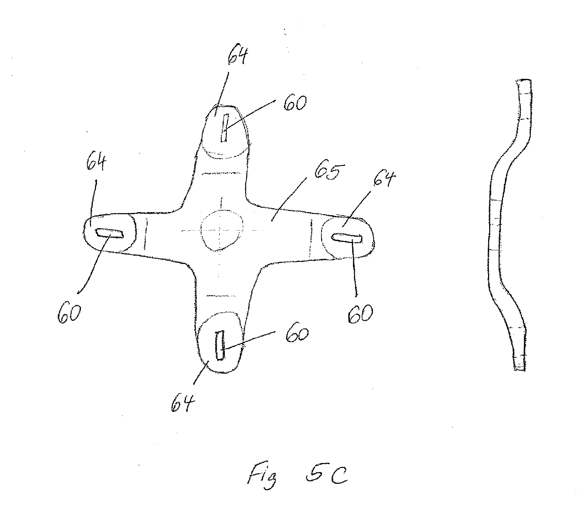

In den Figuren 5A bis 5C sind jeweils Ausgestaltungen eines Stützkörpers dargestellt. So ist der Stützkörper 62 in der Figur 5A eine ebene, in Draufsicht kreuzförmige Platte, die für jede vier Flachstäbe aufweisende Ausführungsform des erfindungsgemäßen Plattenverbinders verwendet werden kann, wobei die entsprechenden Steckschlitze 60 jeweils im Endbereich der vier Kreuzarmabschnitte ausgebildet sind.

Gemäß der Figur 5B ist der Stützkörper 63 von einer ebenen rechteckigen oder quadratischen Platte ausgebildet, in der die Steckschlitze 60 paarweise einander gegenüberliegen. Mit der Bezugsziffer 91 sind Befestigungslöcher gekennzeichnet, die zum Kuppeln des Stützkörpers 63 und damit des Plattenverbinders mit einem die beispielsweise Glaswand abstützenden Traggerüst benutzt werden. Anstelle der Befestigungslöcher 90 kann aber auch jedes andere mögliche Befestigungsmittel vorgesehen werden, das sich zum Kuppeln mit einem solchen Traggerüst eignet. Die an sich eben ausgebildeten Stützkörper 62 und 63 weisen jeweils eine Stützfläche auf, mit der sie an den Platten anliegen können. An der Stelle jeden dargestellten Steckschlitzes 60 kann jedoch auch ein Flachstab senkrecht abstehend angeordnet sein, die an dem Stützkörper 62 oder 63 verankert sein können.

In Figur 5C ist ein weiterer kreuzförmiger Stützkörper 65 dargestellt, der jedoch lediglich im Bereich der Steckschlitze 60 die Stützfläche zum Abstützen an den Platten aufweist. Der zwischen den einzelnen Stützflächen 64 ausgebildete mittlere Bereich des Stützkörpers ist gewölbt ausgebildet und kann nicht an den Platten anliegen. In diesem gewölbten, von den Platten einen Abstand aufweisenden Bereich können Befestigungsmittel zum Kuppeln mit dem die Glaswand stützenden Traggerüst angeordnet werden. Die Ausgestaltung derartiger Befestigungsmittel kann je nach Eignung ausgewählt werden und wird, da nicht Gegenstand der Erfindung, nicht näher erläutert.

Allgemein können an den Stützflächen der Stützkörper 61, 62, 63 und 65 zum Anliegen an den zu verbindenden Platten jeweils Klemm- oder Dichtmaterialien angeordnet sein. Ferner können sowohl die Stützkörper 61, 62, 63, 65 als auch die Schraube 81, oder die Mutternkörper 71, 72 an ihren von den Platten abgewandten Seiten mit Abdeckkappen oder dergleichen versehen werden, die auf diese aufgesteckt oder anderweitig an diesen befestigt werden können.

## Patentansprüche

1. Plattenverbinder zum Verbinden von stumpf aneinandergrenzender Platten (100, 200), insbesondere von Glasplatten, zwischen denen ein Spalt (500) vorhanden ist, mit wenigstens einem Schraubelement (10) zum Hindurchstecken durch den Spalt (500), das mit einem Schraubgewinde versehen ist, wobei das Schraubelement (10) von einem Flachstab (1) gebildet wird und das Schraubgewinde von zwei entsprechend der Gewindesteigung gegeneinander versetzten Zahnungen (11, 12) an den Schmalseiten des Flachstabes (1) gebildet wird.

2. Plattenverbinder gemäß Anspruch 1, wobei das Schraubeelement (50) zum Hindurchstecken durch einen kreuzförmigen Spalt von zwei zusammengefügten Flachstäben (5) gebildet wird, die im Querschnitt ein gleichschenkliges Kreuz formen und bei denen die Zahnungen (51, 53) an der Schmalseite des einen Flachstabes (5) zu den Zahnungen (52, 54) der Schmalseite des benachbarten anderen Flachstabes (5) entsprechend der Gewindesteigung versetzt sind.

3. Plattenverbinder gemäß Anspruch 1, mit zwei Flachstäben (1), die in einer Ebene nebeneinander und im Abstand voneinander angeordnete sind.

4. Plattenverbinder gemäß Anspruch 1 oder 3, mit vier Flachstäben (1), die paarweise in einer Ebene nebeneinander und im Abstand voneinander angeordnet sind, wobei sich die zwei Ebenen jeweils zwischen den Flachstäben (1) eines Paares kreuzen.

5. Plattenverbinder zum Verbinden von stumpf aneinandergrenzender Platten (100, 200, 300, 400), insbesondere von Glasplatten, zwischen denen ein Spalt (501, 502, 503, 504) vorhanden ist, mit wenigstens einem Schraubelement (20, 30) zum Hindurchstecken durch den Spalt, das mit einem Schraubgewinde versehen ist, wobei das Schraubelement (20, 30) von wenigstens zwei Flachstäben (2, 3) gebildet wird, die mit ihren Schmalseiten diametral zur Schraubachse (90) ausgerichtet im Abstand voneinander angeordnet sind, wobei das Schraubgewinde von zwei entsprechend der Gewindesteigung gegeneinander versetzten Zahnungen (21, 22, 31, 32) an den einander zugewandten Schmalseiten der Flachstäbe (2) oder an den einander abgewandten Schmalseiten der Flachstäbe (3) gebildet wird.

6. Plattenverbinder gemäß Anspruch 5, wobei das Schraubelementen von vier Flachstäben (2, 24, 3, 34) gebildet wird, die paarweise einander diametral zur Schraubachse (90) gegenüberliegen, und das Schraubgewinde von vier entsprechend der Gewindesteigung gegeneinander versetzten Zahnungen (21, 22, 31, 32) an den entsprechenden Schmalseiten der Flachstäbe (2, 24, 3, 34) gebildet wird.

7. Plattenverbinder gemäß Anspruch 6, wobei sich die Ebenen der einander paarweise gegenüberliegenden vier Flachstäbe (2, 24, 3, 34) in der Schraubachse (90) im rechten Winkel kreuzen.

8. Plattenverbinder gemäß einem der Ansprüche 1 bis 7, wobei ein Stützkörper (61, 62, 63, 65) mit einer Stützfläche zur Abstützung an den Platten (100, 200, 300, 400) vorgesehen ist und jeder Flachstab (1, 2, 3, 24, 34, 5) von dem Stützkörper (61, 62, 63, 65) senkrecht zu der Stützfläche absteht.

9. Plattenverbinder gemäß Anspruch 8, wobei der Stützkörper (61, 62, 63, 65) als Stützscheibe ausgebildet ist und jeder Flachstab (1, 2, 3, 24, 34, 5) durch einen Steckschlitz (60) hindurchragt, der in der Stützscheibe ausgebildet ist.

10. Plattenverbinder gemäß Anspruch 8 oder 9, wobei zwei Stützkörper (61, 62, 63) vorgesehen sind, deren Stützflächen einander zugewandt sind.

11. Plattenverbinder gemäß einem der Ansprüche 10, wobei die beiden Stützkörper als Muttern (71) ausgebildet sind, die von beiden Enden her auf das Schraubelement (10, 20, 30, 50) aufschraubbar sind.

12. Plattenverbinder gemäß einem der Ansprüche 8, wobei jeder Flachstab (1, 2, 3, 24, 34, 5) an dem Stützkörper (61, 62, 63, 65) verankert ist.

13. Plattenverbinder gemäß einem der Ansprüche 1 bis 12, wobei zusätzlich eine Mutter vorgesehen ist, die auf die Zahnungen der einander zugewandten Flachstäbe (3, 34) aufschraubbar ist.

14. Plattenkörper gemäß einem der Ansprüche 5 bis 12, wobei zusätzlich eine Schraube (81) vorgesehen ist, die zwischen die Zahnungen der einander zugewandten Flachstäbe (2, 24) einschraubbar ist.

15. Anordnung eines Plattenverbinders zum Verbinden stumpf aneinandergrenzender Platten zwischen denen ein Spalt vorhanden ist, wobei die Flachstäbe beidseitig des Spaltes aus diesem herausragen.
